Europäisches Patentamt

European Patent Office

Office européen des brevets

(11) Veröffentlichungsnummer: **0 455 118 A2**

# (12) EUROPÄISCHE PATENTANMELDUNG

(21) Anmeldenummer: 91106565.4

(22) Anmeldetag: 24.04.91

(51) Int. Cl.5: **A61C 13/30**

(30) Priorität: **27.04.90 DE 4013567**
**05.02.91 DE 4103414**

(43) Veröffentlichungstag der Anmeldung:
**06.11.91 Patentblatt 91/45**

(84) Benannte Vertragsstaaten:
**CH DE FR GB IT LI**

(71) Anmelder: **Prestel, Bernd**
**Liebigstrasse 19**
**W-6072 Dreieich(DE)**

(72) Erfinder: **Prestel, Bernd**
**Liebigstrasse 19**
**W-6072 Dreieich(DE)**

(74) Vertreter: **Eyer, Eckhardt Philipp, Dipl.-Ing. et al**
**Patentanwälte Eyer & Linser**
**Robert-Bosch-Strasse 12a**
**W-6072 Dreieich(DE)**

(54) **Vorrichtung zum Setzen von parapulpären Stiften in Zähne.**

(57) Vorrichtung zum Setzen von parapulpären Stiften in Zähne, bestehend aus einem in das zahnärztliche Winkelstück einsetzbaren, mit Standard-Kupplung versehenen Antriebsschaft und einem mit dem Antriebsschaft verbundenen Gewindestift sowie einem Anschlag zur Begrenzung der Einschraubtiefe des Gewindestiftes in den Zahn, dadurch gekennzeichnet, daß der Antriebsschaft (2) von einer Hülse gebildet ist, die im Hülsengrund eine Steckaufnahme (4) für den Geweindestift (1) zur Herstellung einer Drehverbindung aufweist. Es sind die Aufnahme von einer profilierten Bohrung, beispielsweise einer Vierkant-Sacklochbohrung gebildet und der Gewindestift (1) an seinem einen Ende mit einem entsprechend profilierten Endstück versehen. In der Hülsenwand eine den parapulpären Stift gegen Herausfallen sichernde Ausziehbremse, beispielsweise ein Federplättchen, vorgesehen ist. Der Antriebsschaft (3) kann zweiteilig (5, 6) ausgebildet sein zu welchem Zweck beispielsweise der Antriebsschaft (3) aus einem die Standard-Kupplung (2) und die Aufnahme für den parapulpären Stift (1) tragenden Dorn (5) und einer Hülse (6) besteht, die den Dorn (5) umgibt und nach vorn über sein Ende hinausragt, wobei der Dorn und die Hülse mittels eines Lagers (8) miteinander verbunden sind.

FIG. 2

EP 0 455 118 A2

Die Erfindung bezieht sich auf eine Vorrichtung zum Setzen parapulpärer Stifte aus einem in das zahnärztliche Winkelstück einsetzbaren, mit Standard-Kupplung versehenen Antriebsschaft, einen in dem Antriebsschaft gehaltenen Gewindestift sowie einem Anschlag zur Begrenzung der Einschraubtiefe des Gewindestiftes in den Zahn.

Zur Verankerung plastischer Füllungen und Aufbauten in Zähnen finden sog. parapulpäre Stifte Verwendung, die auf ihrer wesentlichen - in der Regel auf der gesamten - Länge mit einem Gewinde versehen sind und mit einer Teillänge in ein auf eine bestimmte Tiefe vorgebohrtes Loch eingeschraubt werden. Zu diesem Zweck sind die Stifte an ihrem hinteren Ende mit einer ihr Einsetzen in das zahnärztliche Winkelstück geeigneten Standard-Kupplung und am Übergang zwischen dem Stiftteil und der Standard-Kupplung mit einer Sollbruchstelle versehen, die nach Aufsetzen des Stiftes am Bohrlochgrund reißt, so daß lediglich der parapulpäre Stift im Zahn, die Standard-Kupplung dagegen im Winkelstück verbleibt, dem sie in der üblichen Weise entnommen werden kann.

Parapulpäre Stifte dieser Art sind - bei im wesentlichen gleicher Gestaltung, Funktion und Handhabung - in verschiedenen Ausführungsformen bekannt. In einer Ausführungsform ist der Gewindestift in etwa im Mittelbereich mit einer Anschlagschulter versehen, so daß der Bruch der Sollbruchstelle nicht nach Aufsitzen der Stiftspitze im Bohrlochgrund sondern nach Aufsitzen der Anschlagschulter am oberen Bohrlochrand erfolgt. Diese Ausführungsform ist auch in Form eines Doppelstiftes gebräuchlich, der aus zwei gleichen durch eine weitere Sollbuchstelle miteinander verbundenen Stiften besteht, wobei die zwischen den Stiften vorgesehene Solbruchstelle schwächer dimensioniert ist als die zwischen dem hinteren Stift und der Standard-Kupplung vorgesehene Sollbruchstelle.

Allen diesen parapulpären Stiften ist gemeinsam, daß sie beim Setzen einen erheblichen Druck auf das - in der Regel bereits anderweitig geschwächte - Zahnskelett ausüben, der in der überwiegenden Zahl der Fälle zu unerwünschten Schädigungen des Dentins führen, wobei die Schädigung bei Verwendung schulterfreier Stifte im pulpennahen Bereich, die Schädigung bei Verwendung von Schulterstiften überwiegend im Bereich des Zahnschaftes auftritt.

Der vorliegenden Erfindung liegt als Aufgabe die Schaffung einer Vorrichtung zugrunde, die das Setzen von parapulpären Stiften mit stark vermindertem Druck auf den Zahn selbst ermöglicht.

Diese Aufgabe wird mit einer Vorrichtung mit den im Patentanspruch 1 wiedergegebenen Merkmalen gelöst.

Durch die Verwendung einer - ihrerseits mit Standard-Kupplung versehen - Hülse mit Stekkaufnahme für den parapulpären Stift im Hülsengrund wird in der gleichen Weise eine feste Drehverbindung gewährleistet, die das sichere und schnelle Einschrauben des parapulpären Stiftes in seine Bohrung erlaubt, wobei sich jedoch der parapulpäre Stift nach Aufsetzen der Hülse auf dem Lochrand des Zahnes bei zunächst voller Anrechterhaltung der Drehverbindung selbst aus seiner Aufnahme zieht und das weitere Einschrauben des parapulpären Stiftes endet, sobald der Stift seine Aufnahme im Hülsengrund verlassen hat. Es genügt somit die Anlage eines nur - bezogen auf die Länge des parapulpären Stiftes - geringfügig längeren Bohrloches, um ein Setzen des Stiftes ohne jegliche Kraftausübung zu gewährleisten. Eine irgendwie geartete Schädigung des Dentins kann damit wesentlich verringert werden. Ein weiterer Vorteil der Vorrichtung der Erfindung besteht auch darin, daß die Stifte anstelle mit einem - herstellungstechnisch aufwendigen - Standard Schaft lediglich mit einem einfachen Mehrkant oder einer anderen einfachen Steckkupplung ausgerüstet werden muß, während die den Standard Schaft tragende Hülse erhalten bleibt und unbegrenzt verwendet werden kann.

Weitere Ausführungsformen und Vorteile ergeben sich aus der nachfolgenden Beschreibung, in der die Erfindung anhand der beiliegenden Zeichnung beispielsweise erläutert ist. Es zeigen

Fig. 1 die Ansicht eines Antriebsschaftes zum Setzen eines parapulpären Stiftes

Fig. 2 eine vergrößtere Schnittdarstellung der Aufnahme für den parapulpären Stift

Fig. 3 einen Schnitt nach III - III durch Fig. 2

Fig. 4 eine andere Ausführungsform eines parapulpären Stiftes

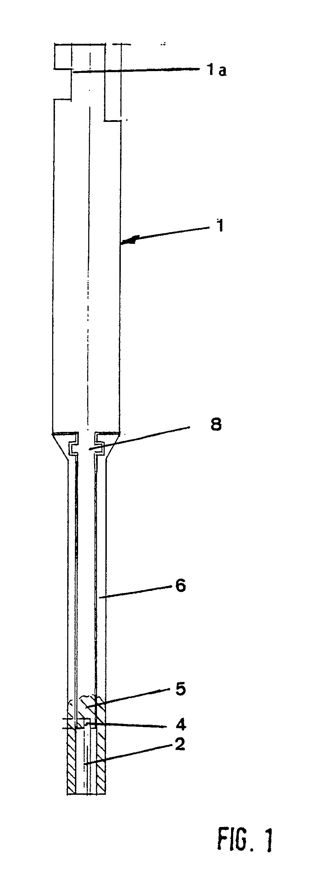

Fig. 1 der Zeichnung zeigt ein Antriebsteil 1, das zum Zwecke der Herstellung einer Verbindung mit dem zahnärztlichen Winkelstück mit Standard-Kupplung 1a versehenen Antriebsschaft 1, der mit einer Hülse (2) vesehen ist, die im Hülsengrund eine Steckaufnahme 4 zur Herstellung einer axial lösbaren Drehverbindung mit dem Gewindestift 3 aufweist. Im Beispielsfalle besteht die Aufnahme aus einer Vierkant-Sacklochbohrung, die zum Einstecken des zu diesem Zweck an seinem hinteren Ende mit einem Vierkant 7 einer geringfügig geringeren Kantenlänge versehenen parapulpären Stiftes dient. Es ist auf diese Weise eine sichere Drehverbindung hergestellt, durch die jedoch das axiale Ausgleiten des Vierkantes aus der Bohrung nicht behindert ist. Zur Verhinderung des freien Herausfallens aufgrund von Schwerkraft ohne Beeinträchtigung der Funktion ist in der Hülsenwand eine - nicht wiedergegeben - den Stift kraftschlüssig durch Reibwirkung haltende Ausziehbremse, beispielsweise ein Federplättchen, oder eine Magnethalterung vorgesehen.

Bei der in Fig. 1 der Zeichnung wiedergegebenen Ausführungsform ist in vorteilhafter Weise der Antriebsschaft 1 aus zwei Teilen gebildet, von denen das eine Teil aus dem die Standard-Kupplung 1a tragenden Schaftteil und einem die Aufnahme 2 für den parapulpären Stift 3 enthaltenden Dorn 5 und das andere Teil aus einer den Dorn 5 umgebenden Hülse 6 besteht, die über die vordere Begrenzung des Dornes 5 hinausragt und mittels eines Drehlagers 8 auf dem Dorn 5 gelagert ist. Mit dieser Ausführungsform kann jede Beeinträchtigung des Zahnes während der Abstützphase vermieden werden insofern, als das Hülsenteil 6 nach Aufsitzen auf dem Zahn die Abstützung bildet, die bei weiterer Betätigung des Antriebs mit dem weiteren Einschrauben des Stiftes sein Herausziehen verursacht, selbst jedoch keine weitere Drehbewegung ausführt sondern als Abstützung für den sich auf dem Lager 8 drehenden Dorn dient.

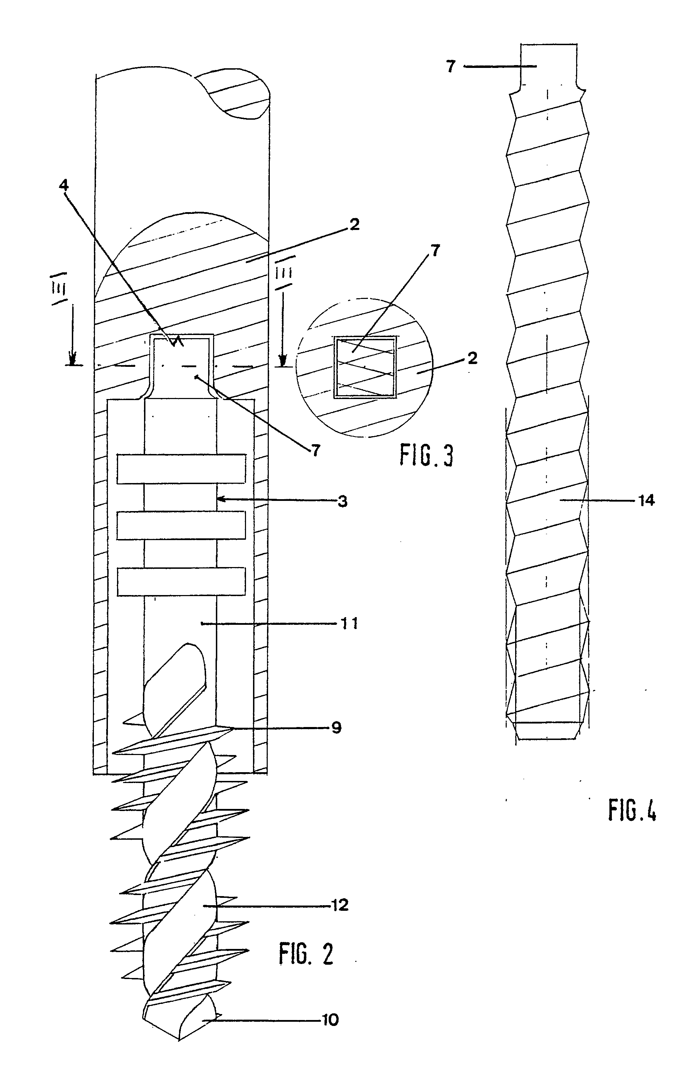

In einer weiteren Ausführungsform der Erfindung ist der parapulpäre Stift 3 - siehe insbesondere Fig. 2 - an seinem Einschraubende mit einem selbstschneidenden Gewinde 9 und an seiner Spitze mit einer Bohrkrone 10 versehen, die eine stärkere Steigung als das selbstschneidende Gewinde 9 aufweist. Es ist auf diese Weise das Setzen eines parapulpären Stiftes weiterhin wesentliche vereinfacht insofern, als das bisher erforderliche Vorbohren eines zum Einschrauben des Stiftes geeigneten Bohrloches entfällt, das Einbringen des Bohrloches vielmehr in einem Arbeitsgang mit dem Setzen des Stiftes selbst erfolgt, wobei durch die angegebene Bemessung der Steigung der Bohrkrone im Verhältnis zur Steigung des selbstschneidenden Gewindes das Eintreten einer Zwangslage mit Sicherheit ausgeschlossen wird.

Die Bohrkrone kann in üblicherweise als zwei- oder sogar mehrschneidiger Bohrer ausgebildet sein, er ist jedoch vorteilhaft als einschneidiger Bohrer ausgebildet, wobei in dem Gewindegang 9 eine der Zahl der Schneiden der Bohrkrone 10 entsprechende Zahl von Spanabführungsgängen ausgebildet sind, die sich von der Schneide bis in den Bereich des Stift-schaftes 11 erstrecken. Es ergibt sich hieraus auch der besondere Vorteil einer einschneidigen Ausführungsform der Bohrkrone, die die Einbringung lediglich eines Spanabführungsganges unter entsprechend geringerer Unterbrechung der Gewindegänge des selbstschneidenden Gewindes erforderlich macht.

Fig. 4 der Zeichnung zeigt einen parapulpären Stift in einer nicht selbstschneidenden Ausführungsform, d.h. mit einem einfachen Gewinde 14 anstelle des selbstschneidenden Gewindes 9 und der Bohrkrone 10. Stifte dieser Art können in der gleichen Weise eingesetzt werden mit dem einzigen Unterschied, daß es zu ihrer Anbringung die vorherige Einbringung eines vorgebohrten Loches in den Zahn in der bisher üblichen Weise bedarf.

Zum Einschrauben des parapulpären Stiftes wird zunächst der Antriebsschaft 1 mit seiner Standard-Kupplung 1a in das zahnärztliche Winkelstück eingesteckt und anschließend der Stift 3 in die im Dorn 5 ausgebildete Aufnahme geschoben. Der parapulpäre Stift ragt nunmehr ausreichend über die vordere Begrenzung der Hülse 6 hinaus und kann damit - im Falle der Verwendung der Ausführungsform ohne eigene Bohrkrone an das vorgebohrte Loch, andernfalls an der vorgesehenen Stelle des nicht vorgebohrten Zahnes - an dem Zahn angesetzt werden. Durch Betätigung des Winkelstückes wird nunmehr der Stift in den Zahn eingeschraubt, bis nach Aufsetzen der Hülse 6 auf dem Rand der Bohrung das Winkelstück bzw. der Dorn nicht mehr nachgeführt werden, es erfolgt jedoch ungeachtet dessen ein weiteres Einschrauben des sich hierbei selbst aus seiner Aufnahme 4 ziehenden Stiftes. Es wird somit weder ein Druck noch - abgesehen von der durch das Bohren bzw. Einschrauben selbst verursachten Kraft - ein Moment auf den Zahn ausgeübt, ebenso nicht eine irgendwie geartete Reibung, da die Hülse 6 drehfrei auf dem Zahn aufsitzt und die Drehung des Dornes über das Lager 8 nicht auf die Hülse 6 übertragen wird.

Nach Verlassen der Aufnahme 4 ist die Drehverbindung zwischen dem Stift 3 und dem Dorn 5 unterbrochen, ein tieferes Eindringen des Stiftes in den Zahn somit ausgeschlossen. Ein Drehmoment bzw. eine Gegenkraft zur Überwindung der Haltekraft einer Sollbruchstelle wird nicht ausgeübt, es ist vielmehr ohne Kraftausübung auf den Zahn eine eindeutig definierte Einschraubtiefe gewährleistet.

**Patentansprüche**

1. Vorrichtung zum Setzen von parapulpären Stiften in Zähne, bestehend aus einem in das zahnärztliche Winkelstück einsetzbaren, mit Standard-Kupplung versehenen Antriebsschaft für den mit einem Gewinde zum Einschrauben in ein Bohrloch versehenen parapulpären Stift sowie einem Anschlag zur Begrenzung der Einschraubtiefe des Stiftes in den Zahn, dadurch gekennzeichnet, daß der Antriebsschaft von einer Hülse (2) gebildet ist, die im Hülsengrund eine Steckaufnahme (4) zur Herstellung einer axial lösbaren Drehverbindung mit dem Gewindestift (3) aufweist.

2. Vorrichtung nach Anspruch 1, dadurch gekennzeichnet, daß die Steckaufnahme von einer profilierten Bohrung, beispielsweise einer Vierkant-Sacklochbohrung (4), gebildet und der parapulpäre Stift (3) an seinem freien Ende mit einem entsprechend profilierten Endstück (7) versehen ist.

3. Vorrichtung nach Anspruch 1, dadurch gekennzeichnet, daß in der Hülsenwand eine den parapulpären Stift gegen Herausfallen sichernde Ausziehbremse, beispielsweise ein Feder- oder Magnetplättchen, vorgesehen ist.

4. Vorrichtung nach Anspruch 1, dadurch gekennzeichnet, daß der Antriebsschaft (2) zweiteilig (5, 6) ausgebildet und die beiden Teile drehbar ineinander gelagert sind.

5. Vorrichtung nach Anspruch 4, dadurch gekennzeichnet, daß der Antriebsschaft aus zwei Teilen gebildet ist, von denen das eine Teil aus dem die Standard-Kupplung (1a) tragenden Schaftteil sowie einem die Aufnahme (2) für den parapulpären Stift (3) enthaltenden Dorn (5) und das andere Teil aus einer den Dorn (5) umgebenden Hülse (6) besteht, die über die vordere Begrenzung des Dornes (5) hinausragt und mittels eines Drehlagers (8) auf dem Dorn (5) gelagert ist.

6. Vorrichtung nach einem der Ansprüche 1 bis 5, dadurch gekennzeichnet, daß der parapulpäre Stift (3) an seinem Einschraubende mit einem selbstschneidenden Gewinde (9) und an seiner Spitze mit einer Bohrkrone (10) versehen ist, die eine stärkere Steigung als das selbstschneidende Gewinde (9) aufweist.

7. Vorrichtung nach Anspruch 6, dadurch gekennzeichnet, daß die Bohrkrone (10) einschneidig ausgebildet ist.

8. Vorrichtung nach Anspruch 6 oder 7, dadurch gekennzeichnet, daß in dem Gewindegang (9) eine der Zahl der Schneiden der Bohrkrone (10) entsprechende Zahl von Spanabführungsgängen ausgebildet sind, die sich von der Schneide bis in den Bereich des Stiftschaftes (11) erstrecken.

FIG. 1

FIG. 2

FIG. 3

FIG. 4